# EUROPÄISCHE PATENTANMELDUNG

(11) **EP 1 635 056 A1**
(43) Veröffentlichungstag der Anmeldung: **15.03.2006**
(21) Anmeldenummer: 04021395.1
(22) Anmeldetag: 09.09.2004
(51) Int. Cl.: F03D 1/04, F03D 11/02, F03D 1/06

(54) **Windkraftanlage**

(71) Anmelder: Herr, Eberhard, 63303 Dreieich (DE)
(72) Erfinder: Herr, Eberhard, 63303 Dreieich (DE)
(74) Vertreter: Knefel, Cordula

(57) **Zusammenfassung**

Die Erfindung betrifft eine Windkraftanlage mit wenigstens einem Rotor mit wenigstens einem an einer Nabe angeordneten Rotorblatt. In Richtung des auftreffenden Windes ist an und/oder in der Nabe wenigstens eine Windfangeinrichtung angeordnet, und in dem wenigstens einen Rotorblatt ist wenigstens ein Windkanal angeordnet, derart, dass der auftreffende Wind der wenigstens einen Windfangeinrichtung in den wenigstens einen Windkanal geleitet wird, und dass die Luft am Ende des Rotorblattes austritt.

## Beschreibung

Die Erfindung betrifft eine Windkraftanlage mit wenigstens einem Rotor.

Zum Stand der Technik gehören Windkraftanlagen, bei denen der Antrieb der Windkraftanlagen auf der Nutzung von Rotorblättern basiert, die ihren Wirkungsgrad aus dem Bereich ab dem Ende der so genannten Rotorblattwurzel der so genannten Rotorblattebene beziehen. Dies resultiert daraus, dass in diesem Bereich die Profile der Rotorblätter die größte Auftriebsfläche aufweisen. Die Drehgeschwindigkeit ist in diesem Bereich größer und damit effizienter als dies im Zentrum der Rotorscheibe der Fall ist. Im Zentrum der Rotorscheibe sowie im Bereich der Rotorblattwurzel liegt die so genannte tote Zone, in der der Wirkungsgrad gleich oder nahezu Null ist. Diese tote Zone reicht bei den meisten zum Stand der Technik gehörenden Windkraftanlagen vom Nabenmittelpunkt bis circa 25 % bis 30 % der Gesamtlänge des Rotorblattes.

Das der Erfindung zugrunde liegende technische Problem besteht darin, eine Windkraftanlage mit wenigstens einem Rotor anzugeben, bei der der im Bereich der toten Zone auftreffende Wind genutzt wird, und bei der damit der Wirkungsgrad der Windkraftanlage deutlich erhöht wird.

Dieses technische Problem wird durch eine Windkraftanlage mit den Merkmalen gemäß Anspruch 1 gelöst.

Dadurch, dass die erfindungsgemäße Windkraftanlage wenigstens einen Rotor mit wenigstens einem an einer Nabe angeordneten Rotorblatt aufweist und dadurch, dass an und/oder in der Nabe wenigstens eine Windfangeinrichtung angeordnet ist, wobei die Windfangeinrichtung dem entgegenkommenden Wind entgegengestellt ausgerichtet ist, sowie dadurch, dass in dem wenigstens einen Rotorblatt wenigstens ein Windkanal angeordnet ist und dadurch, dass der Wind von der wenigstens einen Windfangeinrichtung in den wenigstens einen Windkanal geführt wird, derart, dass die Luft am Ende des Rotorblattes austritt, wird der im Bereich der toten Zone auftreffende Wind genutzt und stellt durch den Austritt an der Blattspitze des Rotorblattes zusätzlich einen Blattspitzenantrieb dar.

Vorteilhaft ist die Windfangeinrichtung trichterförmig ausgebildet, da hierdurch der Wirkungsgrad verbessert ist.

Die trichterförmige Windfangeinrichtung leitet den im Bereich der toten Zone auftreffenden Wind über den Windkanal im Inneren des Rotorblattes an einen Blattspitzenantrieb weiter, der eine zusätzliche Beschleunigung des Rotorsystems und damit eine Erhöhung des Wirkungsgrades verursacht. Gleichzeitig wird vorteilhaft durch eine aerodynamische Ausbildung und Steuerung des Blattspitzenantriebes ein Teil des schädlichen Widerstandes und der Schwingungen an den Blattenden eliminiert.

Die trichterförmige Windfangeinrichtung kann relativ klein ausgebildet sein. Sie kann beispielsweise kleiner als die Blattnabe ausgebildet sein. Vorteilhaft weist sie einen Durchmesser auf, der dem Durchmesser der Blattnabe entspricht. Es ist jedoch auch möglich, die Größe der Windfangeinrichtung bis zur Abdeckung der toten Zone oder etwas größer zu wählen. Vorteilhaft deckt die Windfangeinrichtung wenigstens den Rotorblattwurzelbereich ab.

Gemäß einer bevorzugten Ausführungsform weist jedes Rotorblatt wenigstens einen Windkanal auf, der als wenigstens eine durchgehende Bohrung in dem Rotorblatt ausgebildet ist. Es ist auch möglich, dass das Rotorblatt wenigstens teilweise hohl ausgebildet ist und damit den Windkanal bildet. Es ist auch möglich, den Windkanal mittels eines Rohres oder Schlauches auszubilden, wobei die Verwendung eines flexiblen Schlauches die Montage des Schlauches in dem Rotorblatt erleichtert.

Besonders vorteilhaft werden für den Windkanal die bereits vorhandenen Hohlräume innerhalb der üblichen Rotorblätter genutzt. Hierdurch ist es nicht notwendig, schon bestehende Konstruktionen von Rotorblättern zu verändern.

Gemäß einer weiteren vorteilhaften Ausführungsform der Erfindung ist die Windfangeinrichtung als faltbare oder als eine den Wind im Falle eines Notstopps durchlassende Windfangeinrichtung ausgebildet. Zusätzlich kann in der Nabe eine blendenförmig ausgebildete Platte angeordnet sein, die bei zu starkem Wind oder im Falle eines Notstopps geöffnet wird und zumindest einen Teil des im Bereich der Windfangeinrichtung auftreffenden Windes ungehindert passieren lässt. Hierdurch wird ein Notstopp der Windkraftanlage unterstützt. In diesem Falle nehmen die faltbaren oder wegklappbaren Elemente der Windfangeinrichtung eine neutrale Stellung im Wind ein und minimieren somit den Windwiderstand.

Die Windkanäle in den Rotorblättern verbinden Strömungsauslässe der Windfangeinrichtung mit jeweils wenigstens einer Düse eines Blattspitzenantriebes an den Blattenden der Rotorblätter. Der anliegende Winddruck aus dem Windfangtrichter wird mittels der Windkanäle im Inneren der Rotorblätter an die Spitzen der Rotorblätter weitergegeben und dort vorteilhaft entgegen der Laufrichtung in einen Blattspitzenantrieb (Venturio-Effekt) gespeist. Der Austrittswinkel kann hierbei senkrecht zur Längsachse des Rotorblattes ausgerichtet sein. Es ist auch möglich, einen von der Senkrechten abweichenden Winkel vorzusehen. Möglich sind von der Senkrechten abweichende Winkel von bis zu 30° oder mehr.

Die aus der Windfangeinrichtung kommende Luftströmung wird vorteilhaft in der Mitte der Rotornabe erfasst und über entsprechende Strömungseinlässe in die Wurzeln der Rotoren gespeist. Hierzu sind vorteilhaft Anschlüsse für den Übergang vom Strömungsauslass der Windfangeinrichtung zur Rotornabe sowie zum Rotorblatthohlraum an der Wurzel bei bestehenden Systemen zu modifizieren. Dies hat den Vorteil, dass Eingriffe in die Statik des Blattes vermieden werden. Lediglich die Blattenden werden zur Aufnahme der Düsen des Blattspitzenantriebes konstruktiv angepasst.

Der Blattspitzenantrieb besteht vorteilhaft aus wenigstens einer aerodynamisch angepassten Auslassdüse, die aus dem Windkanal gespeist wird. Der austretende Druck kann entweder direkt als Düsenvortrieb oder -schub genutzt werden. Es ist jedoch auch möglich, über eine Luftturbine den Druck mit einer entsprechenden Leistungsübersetzung an eine Antriebsluftschaufel oder einen Propeller weiterzugeben.

Gemäß einer weiteren vorteilhaften Ausführungsform können die Düsen des Blattspitzenantriebes, beispielsweise die Luftaustrittsdüsen variabel gestaltet werden. Gemäß einer besonders bevorzugten Ausführungsform ist die Steuerung der Düsen des Blattspitzenantriebes computergesteuert, so dass beispielsweise Unwuchten der Rotoren, zum Beispiel über die Einstellung des Luftaustrittswinkels der Düsen ausgeglichen werden können.

Die Steuerungsvorrichtungen sind vorteilhaft elektrischer und/oder mechanischer Art.

Durch den Blattspitzenantrieb erhält man nicht nur einen erhöhten Wirkungsgrad der Windkraftanlage, sondern es wird auch der Anlauf des Rotors erleichtert. Das bedeutet, dass auch schon bei einer minimalen Windgeschwindigkeit der Rotor in Bewegung gesetzt wird.

Der erhöhte Wirkungsgrad der Windkraftanlage wird bei geringer Drehzahl in erster Linie durch den Blattspitzenantrieb erreicht.

Bei höherer Drehzahl wird der Wirkungsgrad durch die Erhöhung des Blatteinstellwinkels, das heißt des Winkels zwischen der Rotordrehebene und der Querschnittsebene des Rotorblattes erhöht.

Gemäß einer weiteren vorteilhaften Ausführungsform ist es möglich, bestehende Windkraftanlagen mit der erfindungsgemäßen Vorrichtung umzurüsten. Hierzu kann ein Umrüstungsbausatz mit folgenden Bestandteilen vorgesehen sein:
1. Trichter, vorzugsweise mit öffenbarer blendenförmig ausgebildeter Platte,
2. Luftführungen, beispielsweise Schläuche, sofern nicht die Hohlräume der Rotoren verwendet werden,
3. Blattspitzen mit Luftaustrittsdüsen.

Weitere Merkmale und Vorteile der Erfindung ergeben sich anhand der zugehörigen Zeichnung, in der mehrere Ausführungsbeispiele einer erfindungsgemäßen Windkraftanlage nur beispielhaft dargestellt sind. In der Zeichnung zeigen:
- Fig. 1: eine erfindungsgemäße Windkraftanlage, teilweise geschnitten;
- Fig. 2: eine Ansicht in Richtung des Pfeiles II der Fig. 1;
- Fig. 3: einen Längsschnitt durch ein Rotorblatt mit einer Auslassdüse;
- Fig. 4: einen Längsschnitt durch ein Rotorblatt mit einer Luftturbine und einem Propeller an der Blattspitze;
- Fig. 5: einen Querschnitt durch eine Nabe mit trichterförmiger Windfangvorrichtung;
- Fig. 6: eine Darstellung der toten Zone eines Rotorblattes gemäß dem Stand der Technik.

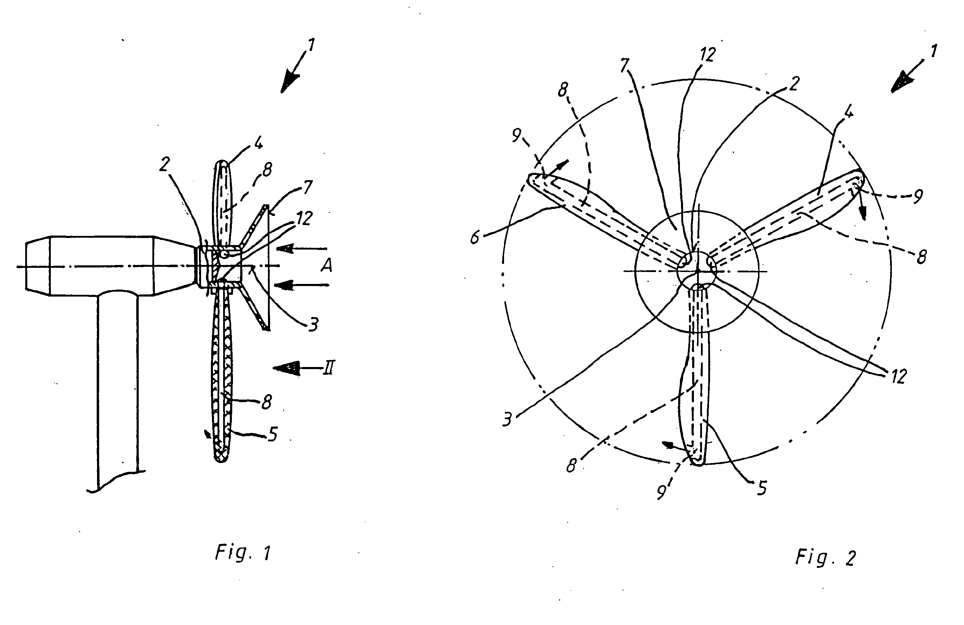

Fig. 1 und 2 zeigen eine Windkraftanlage (1) mit einem an einer Nabe (2) angeordneten Rotor (3), der Rotorblätter (4, 5, 6) aufweist. An der Nabe (2) ist eine trichterförmige Windfangeinrichtung (7) angeordnet, die den in Richtung des Pfeiles (A) auf die Windkraftanlage (1) auftreffenden Wind auffängt. Vorteilhaft trifft der Wind möglichst senkrecht auf die trichterförmige Windfangeinrichtung (7).

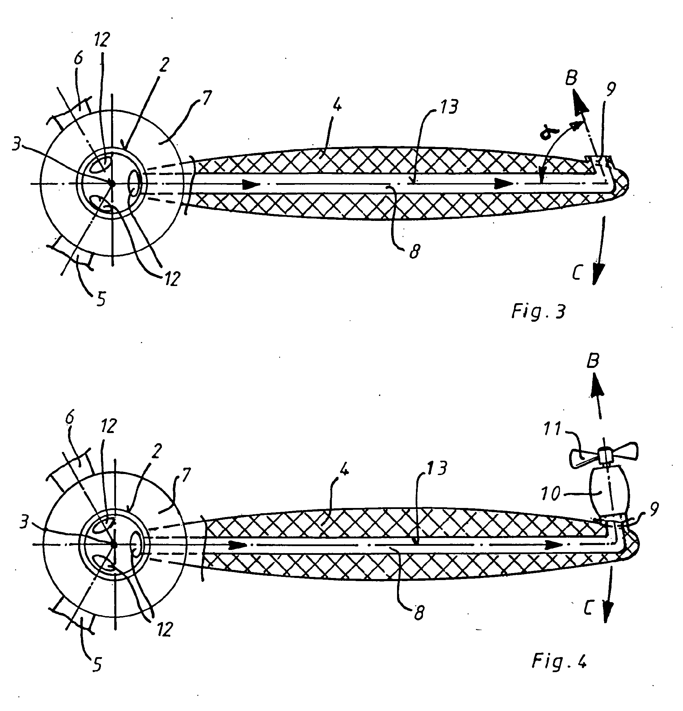

Wie in den Fig. 3 und 4 dargestellt, wird der auf die trichterförmige Windfangeinrichtung (7) auftreffende Wind in die Nabe (2) und von dort in Windkanäle (8) der Rotorblätter (4, 5, 6) geleitet. Die Windkanäle (8) weisen Strömungseinlässe (12) auf.

Wie in Fig. 3 dargestellt, durchströmt die Luft den Windkanal (8) des Rotorblattes (4) und tritt am Ende aus einer Auslassdüse (9) in Richtung des Pfeiles (B) aus. Die Austrittsrichtung (B) liegt circa im 70°-Winkel (α) zur Längsachse (13) des Windkanales (8) und ist entgegen der Laufrichtung (C) des Rotors (3) ausgerichtet. Hierdurch wird ein zusätzlicher Blattspitzenantrieb erzeugt.

Gemäß Fig. 4 weist das Rotorblatt (4) wiederum den Windkanal (8) auf. Der Windkanal (8) mündet in eine Luftturbine (10), die den austretenden Winddruck an einen Propeller (11) weitergibt. Die Austrittsrichtung der den Kanal (8) durchströmenden Luft liegt in Richtung des Pfeiles (B).

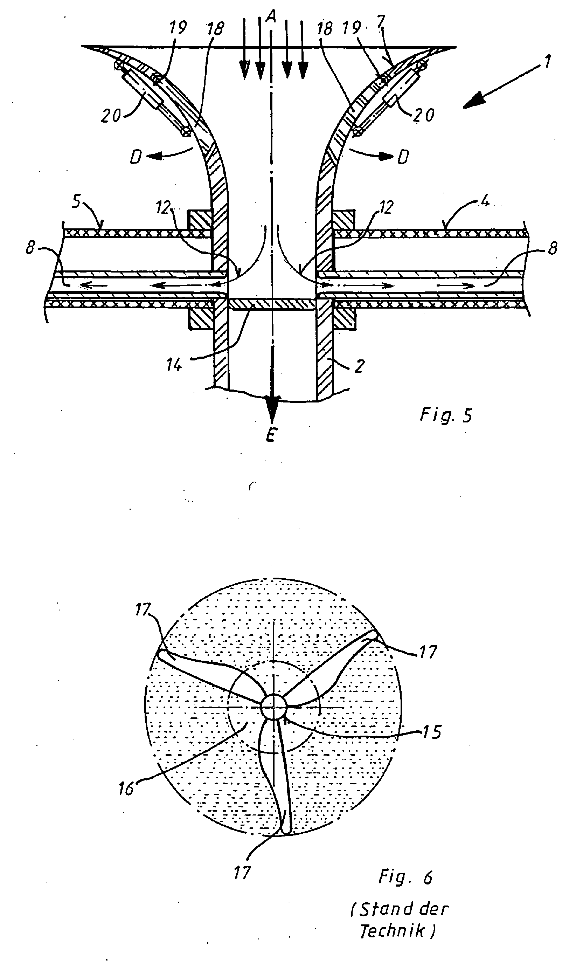

Fig. 5 zeigt die Windkraftanlage (1) mit der Nabe (2) und den Rotorblättern (4, 5) sowie der trichterförmigen Windfangeinrichtung (7). Der Wind trifft in Richtung der Pfeile (A) auf die trichterförmige Windfangeinrichtung. Von dort wird er in Strömungseinlässe (12) der in den Rotorblättern (4, 5) angeordneten Windkanäle (8) geleitet.

In der Nabe (2) ist eine in Form einer Blende ausgebildete Platte (14) angeordnet. Im Falle eines Notstopps wird die blendenförmige Platte (14) geöffnet, so dass ein Teil des in die trichterförmige Windfangeinrichtung (7) eintretenden Windes in Richtung des Pfeiles (E) ungenutzt die Windkraftanlage (1) passiert und keine Wirkung entfaltet.

Alternativ oder zusätzlich ist es vorteilhaft, im Falle eines Notstopps Klappen (18) der trichterförmigen Windfangeinrichtung (7) zu öffnen. Hierzu sind federbelastete Scharniere (19) vorgesehen. Im Falle des Normalbetriebes sind die Klappen (18) aufgrund der Federkraft der federbelasteten Scharniere (19) geschlossen. Wird die Windstärke zu groß, öffnen sich die Klappen (18) selbsttätig. Es ist auch möglich, die Klappen (18) elektromechanisch zu betätigen für den Fall eines Notstopps.

Anstelle der federbelasteten Scharniere (19) können nicht federbelastete Scharniere (19) und zusätzlich Pneumatik- oder Federdämpfer (20) vorgesehen sein.

Gemäß Fig. 6 ist ein zum Stand der Technik gehörender Rotor (15) dargestellt. Im Bereich (16) ist eine tote Zone. Das heißt, im Blattwurzelbereich der Rotorblätter (17) ist der Wirkungsgrad des Rotors gleich Null oder sehr gering.

Vorteilhaft wird gemäß der Erfindung die tote Zone (16) mit der trichterförmigen Windfangeinrichtung (7) abgedeckt.

### Bezugszahlen

- 1: Windkraftanlage
- 2: Nabe
- 3: Rotor
- 4, 5, 6: Rotorblätter
- 7: trichterförmige Windfangeinrichtung
- 8: Windkanäle
- 9: Auslassdüse
- 10: Luftturbine
- 11: Propeller
- 12: Strömungseinlässe
- 13: Längsachse
- 14: blendenförmige Platte
- 15: Rotor
- 16: tote Zone
- 17: Rotorblätter
- 18: Klappe
- 19: Scharniere
- 20: Pneumatikdämpfer beziehungsweise Federdämpfer
- α: Winkel
- A, B, C, D, E: Pfeile

## Patentansprüche

1. Windkraftanlage mit wenigstens einem Rotor mit wenigstens einem an einer Nabe angeordneten Rotorblatt, **dadurch gekennzeichnet, dass** an und/oder in der Nabe (2) wenigstens eine Windfangeinrichtung (7) angeordnet ist, die dem entgegenkommenden Wind entgegengestellt ausgerichtet ist, dass in dem wenigstens einen Rotorblatt (4, 5, 6) wenigstens ein Windkanal (8) angeordnet ist, und dass die Windkraftanlage als eine den Wind von der wenigstens einen Windfangeinrichtung (7) in den wenigstens einen Windkanal (8) leitende Windkraftanlage ausgebildet ist, derart, dass die Luft am Ende des Rotorblattes (4, 5, 6) austritt.

2. Windkraftanlage nach Anspruch 1, **dadurch gekennzeichnet, dass** die wenigstens eine Windfangeinrichtung (7) trichterförmig ausgebildet ist.

3. Windkraftanlage nach Anspruch 1 oder 2, **dadurch gekennzeichnet, dass** der Windkanal (8) als wenigstens eine durchgehende Bohrung in dem Rotorblatt (4, 5, 6) ausgebildet ist, dass das Rotorblatt (4, 5, 6) wenigstens teilweise hohl ausgebildet ist, und/oder dass in dem Rotorblatt (4, 5, 6) wenigstens ein Rohr oder wenigstens ein Schlauch als Windkanal (8) angeordnet ist.

4. Windkraftanlage nach einem der vorhergehenden Ansprüche, **dadurch gekennzeichnet, dass** die Windfangeinrichtung (7) als eine eine tote Zone (16) des Rotors (3) der Windkraftanlage (1) überdeckende Windfangeinrichtung (7) ausgebildet ist.

5. Windkraftanlage nach einem der vorhergehenden Ansprüche, **dadurch gekennzeichnet, dass** die Windfangeinrichtung (7) als faltbare und/oder aufklappbare, den Wind im Falle eines Notstopps durchlassende Windfangeinrichtung (7) ausgebildet ist.

6. Windkraftanlage nach einem der vorhergehenden Ansprüche, **dadurch gekennzeichnet, dass** im Bereich der Nabe (2) eine blendenförmige, öffenbare Platte (14) vorgesehen ist.

7. Windkraftanlage nach einem der vorhergehenden Ansprüche, **dadurch gekennzeichnet, dass** an dem Blattende des wenigstens einen Rotorblattes (4, 5, 6) am Ende des Windkanals (8) wenigstens eine Düse (9) zum Austritt der das Rotorblatt (4, 5, 6) durchströmenden Luft als Blattspitzenantrieb vorgesehen ist.

8. Windkraftanlage nach Anspruch 7, **dadurch gekennzeichnet, dass** die wenigstens eine Düse als eine im Winkel verstellbare Düse (9) ausgebildet ist.

9. Windkraftanlage nach einem der vorhergehenden Ansprüche, **dadurch gekennzeichnet, dass** an dem Blattende des wenigstens einen Rotorblattes (4, 5, 6) am Ende des Windkanals (8) wenigstens eine Luftturbine (10) als Blattspitzenantrieb vorgesehen ist.

10. Windkraftanlage nach Anspruch 9, **dadurch gekennzeichnet, dass** die Luftturbine (10) als eine einen aus dem Windkanal (8) austretenden Winddruck an eine Antriebsluftschaukel oder wenigstens einen Propeller (11) weitergebende Luftturbine (10) ausgebildet ist.

11. Windkraftanlage nach einem der vorhergehenden Ansprüche, **dadurch gekennzeichnet, dass** der Windkanal (8) des wenigstens einen Rotorblattes (4, 5, 6) derart ausgebildet ist, dass die den Windkanal (8) durchströmende Luft entgegengesetzt zur Laufrichtung des Rotors (3) an der Blattspitze austritt.

12. Windkraftanlage nach einem der vorhergehenden Ansprüche, **dadurch gekennzeichnet, dass** wenigstens ein Steuermittel für den wenigstens einen Blattspitzenantrieb vorgesehen ist.

13. Windkraftanlage nach Anspruch 12, **dadurch gekennzeichnet, dass** die Steuermittel von wenigstens einem Computer steuerbar ausgebildet sind.
